# EUROPEAN PATENT SPECIFICATION

(11) **EP 0 381 503 B1**
(45) Date of publication and mention of the grant of the patent: **19.07.1995**
(21) Application number: 90301067.6
(22) Date of filing: 01.02.1990
(51) Int. Cl.: F16H 7/08, G03G 15/00

(54) **Inverted synchronous belt drive system**
Umgekehrtes Zahnriemengetriebe
Transmission à courroie dentée inversée

(30) Priority: 02.02.1989 US 305267
(43) Date of publication of application: 08.08.1990
(73) Proprietor: XEROX CORPORATION, Rochester New York 14644 (US)
(72) Inventor: Salomon, Jamers A., Rochester, New York 14610 (US)
(74) Representative: Goode, Ian Roy

(56) References cited:
- EP-A- 234 732
- EP-A- 316 482
- DE-A- 3 346 615
- DE-A- 3 637 432
- DE-C- 3 433 363
- GB-A- 988 238
- US-A- 3 664 204
- US-A- 4 327 992
- IBM TECHNICAL DISCLOSURE BULLETIN, vol. 24, no. 7A, December 1981, pages 3539-3540, New York, US; R.K. BETHEL et al.: "Bidirectional belt constant tensioning device"

## Description

This invention relates to a drive transmission apparatus which is particularly useful for a copying machine, and more particularly, to a drive system that allows coupling and uncoupling of machine parts with minimal effects on the machine's copy quality.

Present day copiers are designed such that one or more of the processing stations may be included in a process unit or cartridge which is removable from the main body of the copier for the replacement by a new unit when its life is exhausted or for replacement by a different unit having different capability, such as, the developer housing. Some copiers drive the photoreceptor and developer housing with a gear train which is opened each time the photoreceptor and developer customer replaceable units (CRU's) are removed for replenishment, and when the upper part of the clamshell copier housing is opened for other purposes. In order to allow the drive to be reliably "broken" and restored, pivoting idler gears are provided. These idlers are mounted so that the driving torque to the CRU's driven gears draws the idlers into mesh. This is conventional design whenever a gear train may need to be opened, as in many copiers which use a clamshell architecture for jam clearance.

With most gear trains, it is difficult to meet rigorous photoreceptor and developer drive motion specifications for raster images, particularly halftones which are very sensitive to photoreceptor motion errors. Photoreceptor motion errors can be minimized by the use of expensive, high quality gears for the driven, drive and pivoting idler gears, but would be prohibitively expensive and open to damage due to contamination.

Heretofore, expensive and cumbersome means have been provided to facilitate removal and mounting of an assembly within a machine, for example, U. S. Patent 3,664,204 discloses a multiple roller belt assembly for an electrostatic printing machine including an endless photoconductive belt and two horizontal shafts, one of which is rotatably driven and the other of which is fixed. A means is also provided for removing and mounting the assembly. In U. S. Patent 4,279,496 there is shown a photoconductive belt support system for an electrophotographic printing machine that includes a belt and movable mounting means which deflects the belt to an inoperative position to facilitate the removal of the belt from the machine. A timing belt is shown associated with a pair of pulleys in U. S. Patent 4,583,962 in a belt tensioning device.

It is an object of the present invention to provide a drive transmission apparatus which is suitable for driving rotational members within a removable device, such as a customer replaceable unit of a copying machine, and which is inexpensive and reliable, allowing drive to be 'broken' and restored easily without disturbing the image.

According to the present invention, there is provided a copier or printer apparatus including a cartridge that is removably mounted therein and the cartridge including at least one process means which is driven, when the cartridge is mounted in the apparatus, by a drive transmitting mechanism from driving means within the apparatus, the drive transmitting mechanism comprising
a first toothed pulley in the apparatus driven by the driving means of the apparatus,
a second toothed pulley in the cartridge for driving the process means, and
a toothed belt surrounding at least two idler rollers, the teeth of the belt being on the outside surface thereof, and the first and second pulleys each being adapted to engage a compliant portion of the belt between two of said idler rollers, the toothed belt and idler rollers being mounted either on the cartridge or on the apparatus,
whereby on insertion of the cartridge into, or removal of the cartridge from, the apparatus, either the first toothed pulley (if the toothed belt is mounted on the cartridge) or the second toothed pulley (if the toothed belt is mounted on the apparatus) is engaged with or disengaged from a compliant portion of the toothed belt.

Accordingly, an economical drive system for a cartridge in a copier/printer is disclosed in which an inverted timing belt is used to allow the driven pulley to be moved out of the copier/printer, and disengaged from as well as re-engaged with the timing belt with ease and minimal image disturbance.

The above-mentioned features and others of the invention, together with the manner of obtaining them, will best be understood by making reference to the following specification in conjunction with the accompanying drawings, wherein:
Figure 1 is a schematic elevational view showing an electrophotographic recording apparatus employing the features of the present invention.
Figures 2 and 2A are enlarged partial side views of the unique cartridge drive system of Figure 1.
Figures 3, 3A and 3B are enlarged partial side views of an alternative component drive system embodiment of the present invention.
Figures 4, 4A and 4B are enlarged partial side views of an yet another alternative apparatus component drive system embodiment of the present invention.

While the present invention will hereinafter be described in connection with preferred embodiments thereof, it will be understood that it is not intended to limit the invention to those embodiments. On the contrary, it is intended to cover all alternatives, modifications and equivalents as may be included within the scope of the invention as defined by the appended claims.

For a general understanding of the features of the present invention, reference is had to the drawings. In the drawings, like reference numerals have been used throughout to designate identical elements.

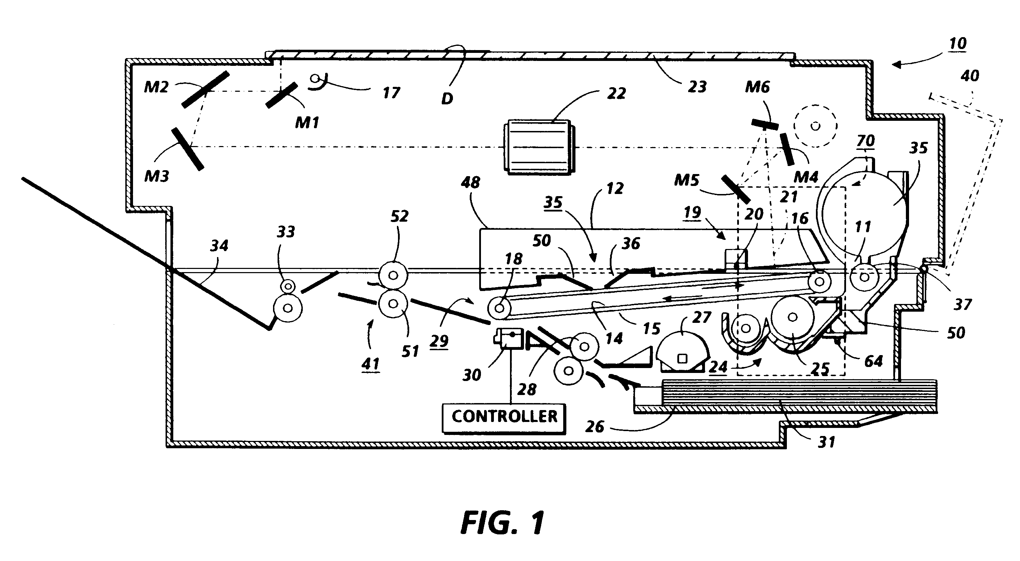

Inasmuch as the art of electrophotographic recording is well known, the various processing stations employed in the Figure 1 recording machine will be shown hereinafter schematically and their operation described briefly with reference thereto.

Referring now to Figure 1, there is shown by way of example, an automatic electrostatographic recording machine 10 which includes a removable processing cartridge and development housing. The reproducing machine depicted in Figure 1 illustrates the various components utilized therein for producing copies from an original document. Although the apparatus of the present invention is particularly well adapted for use in automatic electrostatographic reproducing machines, it should become evident from the following description that it is equally well suited for use in a wide variety of processing systems including other electrostatographic systems and is not necessarily limited in application to the particular embodiment or embodiment shown herein.

The reproducing machine 10 illustrated in Figure 1 employs a removable processing cartridge 12 which may be inserted and withdrawn from the main machine frame. Cartridge 12 includes an image recording belt like member 14 the outer periphery of which is coated with a suitable photoconductive material on surface 15. The belt is suitably mounted for revolution within the cartridge about driven transport roll 16, around idler roll 18 and travels in the direction indicated by the arrows on the inner run of the belt to bring the image bearing surface thereon past the plurality of xerographic processing stations. The unique drive system 70 provides power and coordinates the motion of the various cooperating machine components whereby a faithful reproduction of the original input scene information is recorded upon a sheet of final support material 31, such as paper or the like.

Initially, the belt 14 moves the photoconductive surface 15 through a charging station 19 wherein the belt is uniformly charged with an electrostatic charge placed on the photoconductive surface by charge corotron 20 in known manner preparatory to imaging. Thereafter, the belt 14 is driven to exposure station 21 wherein the charged photoconductive surface 15 is exposed to the light image of the original input scene information, whereby the charge is selectively dissipated in the light exposed regions to record the original input scene in the form of electrostatic latent image. It should be understood that while a light lens imaging system is decsribed hereein, the inverted synchronous belt drive system of the present invention is equally, if not more so, suited for use by a laser raster scanning printer in order to improve image quality.

The optical arrangement creating the latent image comprises a scanning optical system with lamp 17 and mirrors M₁, M₂, M₃ mounted to a a scanning carriage (not shown)to scan the original document D on the imaging platen 23, lens 22 and mirrors M₄, M₅, M₆ to transmit the image to the photoconductive belt in known manner.The speed of the scanning carriage and the speed of the photoconductive belt are synchronized to provide faithful reproduction of the original document. After exposure of belt 14 the electrostatic latent image recorded on the photoconductive surface 15 is transported to development station 24, wherein developer is applied to the photoconductive surface 15 of the belt 14 rendering the latent image visible. The development station includes a magnetic brush development system including developer roll 25 utilizing a magnetizable developer mix having course magnetic carrier granules and toner colorant particles as will be discussed in greater detail hereinafter.

Sheets 31 of the final support material are supported in a cassette 26. With the stack in the cassette, the sheet separator segmented feed roll 27 feeds individual sheets therefrom to the registration pinch roll pair 28. The sheet is then forwarded to the transfer station 29 in proper registration with the image on the belt and the developed image on the photoconductive surface 15 is brought into contact with the sheet 31 of final support material within the transfer station 29 and the toner image is transferred from the photoconductive surface 15 to the contacting side of the final support sheet 31 by means of transfer corotron 30. Following transfer of the image, the final support material which may be paper, plastic, etc., as desired, is separated from the belt by the beam strength of the support material 31 as it passes around the idler roll 18, and the sheet containing the toner image thereon is advanced to fixing station 41 wherein roll fuser 51, 52 fixes the transferred powder image thereto. After fusing the toner image to the copy sheet the sheet 31 is advanced by output rolls 33 to sheet stacking tray 34.

Although a preponderance of toner powder is transferred to the final support material 31, invariably some residual toner remains on the photoconductive surface 15 after the transfer of the toner powder image to the final support material. The residual toner particles remaining on the photoconductive surface after the transfer operation are removed from the belt 14 by the cleaning station 35 which comprises a cleaning blade 36 in scraping contact with the outer periphery of the belt 14 and contained within cleaning housing 48 which has a cleaning seal 50 associated with the upstream opening of the cleaning housing. Alternatively, the toner particles may be mechanically cleaned from the photoconductive surface by a cleaning brush as is well known in the act. Also, the cleaning blade can be cleaned by reversing the photoconductive surface and thereby force any fibers caught under the blade back into the cleaning housing.

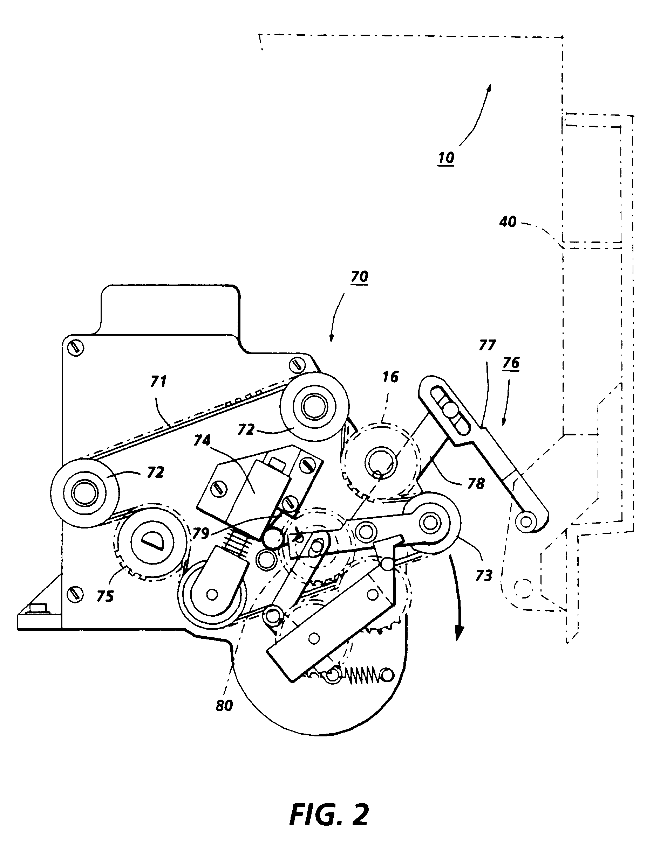

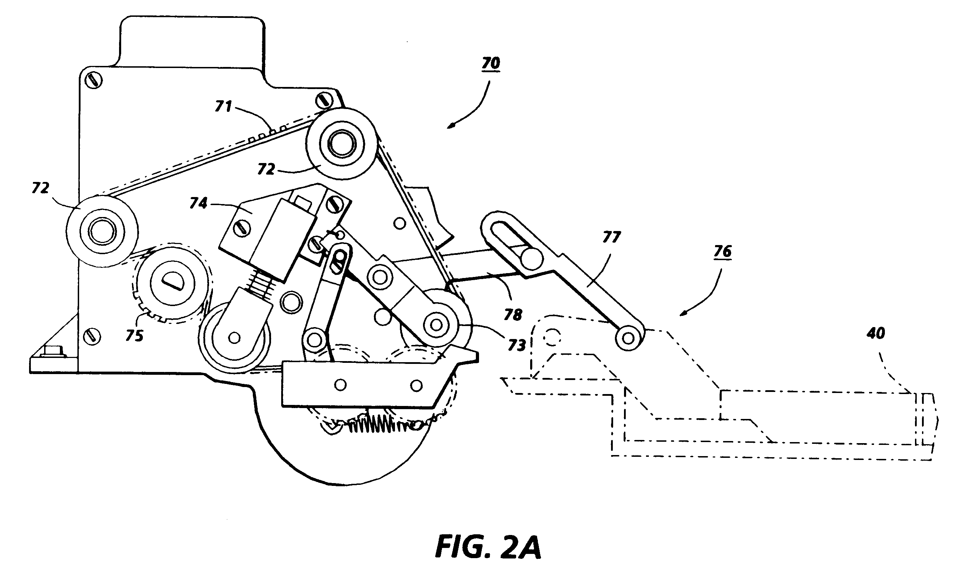

Turning now to an aspect of the present invention, a drive system 70 is shown in Figures 2 and 2A that is designed to be economical and facilitate the easy removal and insertion of cartridge 12 and the developer housing. Figures 2 and 2A, represent drive system 70 in its active and passive positions. In Figure 2, hinged door 40 of the which is located in one portion of the two part clamshell housing of reproduction machine 10 is shown in its closed position and drive system 70 in its active position which means that driven pulley 16 of cartridge 12 is in position to be driven by the drive system. Drive system 70 comprises an inverted timing belt 71 entrained around two identical smooth surfaced idler rolls 72, a movable idler 73 and a spring loaded idler 74. The idlers are placed to insure large wraps of timing belt 71 around drive gear 75 and driven pulley 16. The greater the wrap angle, the better the reliability and motion quality of the drive system. Drive gear 75, while positioned with a large portion of its outer surface wrapped by timing belt 71, is turned by a conventional motor (not shown) thereby causing the teeth of the gear to mesh with the teeth in timing belt 71 and drive the belt. With this drive system, approximately seven teeth of the timing belt are engaged by the drive and driven gears as oppose to about 1 to 1 1/2 teeth of conventional gears. Gear 16 of cartridge 12 which contains photoconductive material 15 in turn is driven with minimum gear mating errors being transmitted to the photoconductive material thereby allowing high quality images to be printed by reproduction machine 10. In order to remove the cartridge, idler 73 is pivoted down by use of a conventional linkage mechanism 76 when access door 40 is opened. The driven pulley also moves relative to other components of the machine when the machine's access door is opened.

Idler 74 adjacent to the drive gear or pulley 75 is spring loaded to take up timing belt slack in order to insure smooth driving. In order to avoid introducing compliance to this critical drive, effecting motion quality, a hard stop is provided in the idler. This stop prevents the idler from deflecting when it is guiding the tight (driving) span of the timing belt. Thus active tensioning occurs on the slack side of the belt. Motion quality is assured only if significant constant load torque is present, to ensure that the tight span idler is kept against the stop, counter acting the spring force. Spring loaded idler 74 must be used to take up slack due to variations in driven pulley positions. As will be described hereinafter, dual spring loaded idlers can be used to enable reversing of the drive direction of the cartridge for blade cleaning purposes, if desired. Torque draws the drive system into mesh.

As shown in Figure 2A, in order to remove cartridge 12 from reproduction machine 10, access door 40, which is on the right end of machine 10 as one faces the front of the machine, is lowered and through conventional linkage 76 rotates pulley 73 away from timing belt 71 to an inactive position while simultaneously rotating gear 80 to enhance removal of a developer cartridge. The developer housing mates with gear 80 for driving purposes. When access door 40 is lowered, arm 77 of linkage 76 moves a pin interconnected therewith from arm 78 which thereby moves arm 78. Arm 78 is connected to movable idler 73 and rotates idler 73 to its inactive position. An over-center spring 79 is attached to arms 77 and 78 and acts to influence the opening and closing of access member 40 as well as influence the mating of driven pulley 13 with timing belt 71.

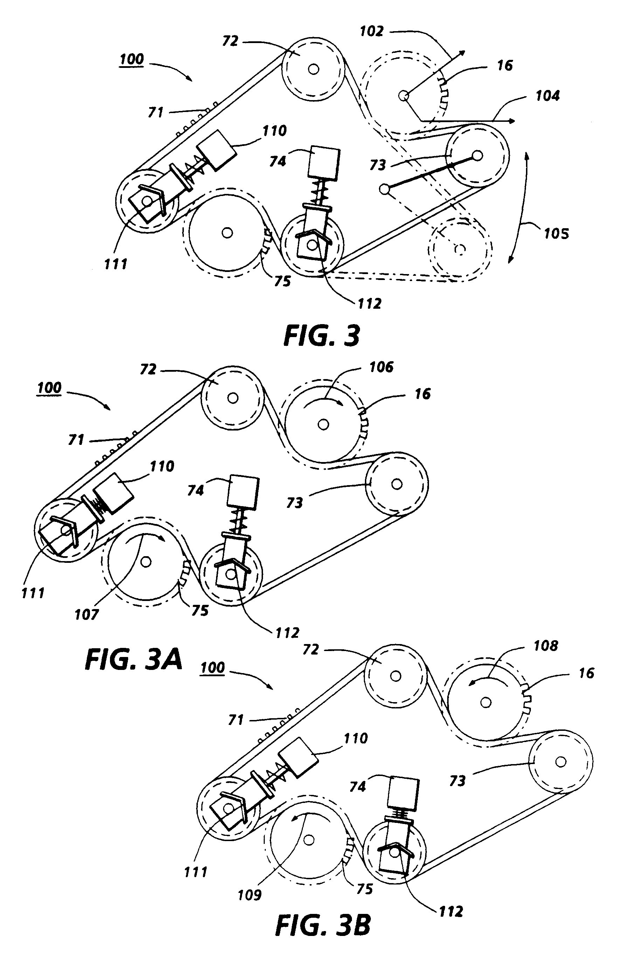

Alternatively, a timing belt drive system 100 is shown in Figures 3, 3A and 3B that allows photoconductive surface 15 of cartridge 12 to be reversed for blade cleaning in order to prevent any likelihood of streaking toner on copy sheets. Reversing of the photoconductive surface causes any paper fibers caught under the cleaning blade to be returned to the cleaner housing. Drive system 100 is similar to that shown in Figures 2 and 2A except that a second spring loaded idler is added in place of a fixed idler. This allows the timing belt to be reversed. The pulley 16 of cartridge 12 is shown in Figure 3 in its driven position, that is, with access door 40 closed. The pulley 16 is pivoted in the direction of arrow 102 when access door 40 is lowered or opened and the cartridge removed from the machine in the direction of arrow 104. Opening or lowering of door 40 causes pivoting idler 73 to move in the direction of arrow 105. When drive pulley 75 is rotated in the forward direction of arrow 107 as shown in Figure 3A, idler 110 is compressed against hard stop 111 in order to maintain a rigid drive coupling on the tight side of the belt. The rigid system will ensure synchronous drive indepent of load variations. Spring loaded idler 74 maintains about 1.5 to 2 kg. of force to prevent tooth jumping. Just the reverse is true as shown in Figure 3B when drive pulley 75 is reversed in the direction of arrow 109 to apply reverse rotation of pulley 16, that is, spring loaded idler 74 is hard stopped by stop 112 and spring loaded idler 110 is freely biased. In both applications, slack side tension is maintained and the tight side idler is rigidly held dynamically stiff by the load torque.

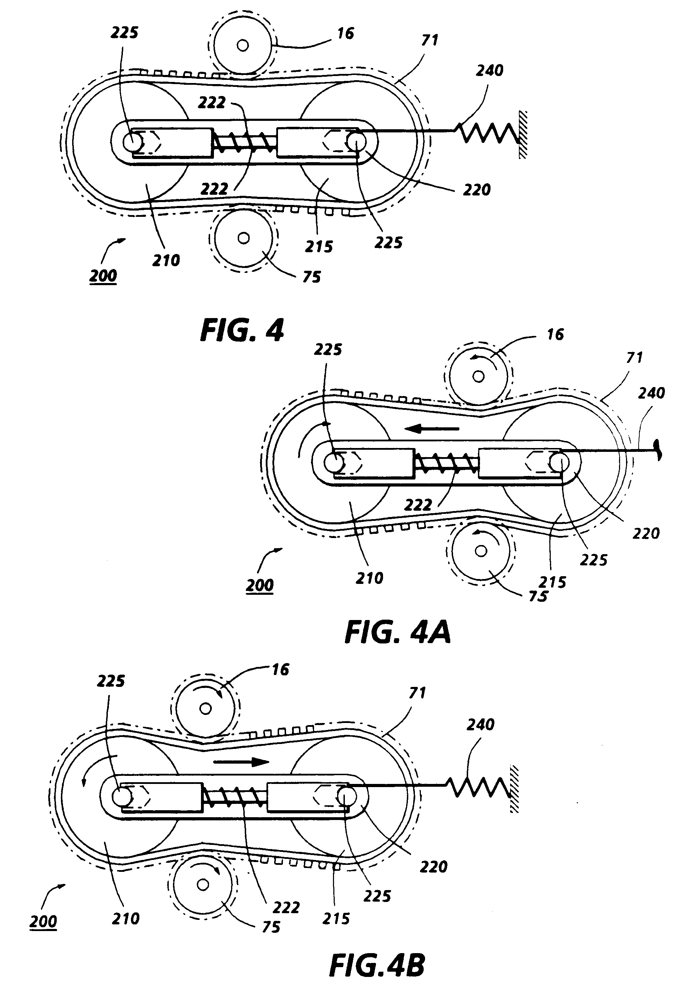

In another embodiment of the present invention, a reversible, low noise timing belt drive system 200 is shown in Figures 4, 4A and 4B that incorporates a high belt/drive member/driven member teeth contact ratio and comprises a timing belt 71 entrained around two smooth surfaced idler rolls 210, 215. The idler rolls are mounted on separate shafts 225 and connected to each other by use of a link member 220 that has a bias spring 222 in a middle portion thereof. Both idlers are attached to a frame that floats and could pivot, if desired. A light spring 240 allows the idler belt to move relative to either the driven or drive pulley and keep track of the assembly when driven pulley 13 is removed from the machine. The idler belt assembly can be supported by other means provied it has the feedom to move relative to the driven and drive pulleys. Spring 240 pulls against spring 222 in order to make sure that the timing belt does not slip off the idler rolls. The link connection 220 does not have to float. When the motor of the reproduction machine 10 is actuated, drive pulley 75 turns timing belt 71 in a forward direction as viewed in Figure 4A which in turn rotates driven pulley 16 from the position shown in Figure 4 until the drive system is in the position of Figure 4A. If reversal of the driven gear is desired, the drive system shifts to the position shown in Figure 4B.

It should now be understood that a compact and low cost entire belt drive system has been disclosed which enables the removal and insertion of the standard machine cartridge by the customer. The drive system that facilitates this easy customer replacement of components includes an inverted synchronous belt drive in the form of a timing belt mounted around a plurality of idler rolls for meshing with drive as well as driven pulleys. The drive system is configured in a number of instances to be reversed, if desired. Using a timing belt tensioned over two smooth idler rolls to create a "compliant gear" between driving and driven rolls enables easy cartridge removal and replacement in clamshell architectures, for example. The compliant belt makes broader contact with the driving and driven rolls than made by a rigid gear with the result that drive variation is reduced because of averaging over a large number of teeth. Advantages of using an inverted synchronous drive belt system to couple and uncouple machine parts include: (1) system superiority to gears in that the timing belt is less sensitive to gear drive contamination; (2) the timing belt is less sensitive to photoreceptor drive motion; (3) the timing belt compensates for variations in position between the drive and driven pulleys; (4) the timing belt allows the drive to be broken for jam clearing purposes; and (5) the timing belt allows the photoreceptor to be removed and inserted within the machine with ease.

## Claims

1. Copier or printer apparatus (10) including a cartridge (12) that is removably mounted therein and the cartridge including at least one process means (14) which is driven, when the cartridge is mounted in the apparatus, by a drive transmitting mechanism (70 or 100 or 200) from driving means within the apparatus, the drive transmitting mechanism comprising
a first toothed pulley (75) in the apparatus driven by the driving means of the apparatus,
a second toothed pulley (16) in the cartridge for driving the process means, and
a toothed belt (71) surrounding at least two idler rollers (72, 73, 74, 110, or 210, 215), the teeth of the belt being on the outside surface thereof, and the first and second pulleys each being adapted to engage a compliant portion of the belt between two of said idler rollers, the toothed belt and idler rollers being mounted either on the cartridge or on the apparatus,
whereby on insertion of the cartridge (12) into, or removal of the cartridge from, the apparatus, either the first toothed pulley (75) (if the toothed belt is mounted on the cartridge) or the second toothed pulley (16) (if the toothed belt is mounted on the apparatus) is engaged with or disengaged from a compliant portion of the toothed belt.

2. Apparatus according to claim 1, wherein at least one of said toothed pulleys (75 or 16) deflects said belt (71) by such an amount that from 5 to 9 teeth of the belt are engaged by teeth of the pulley.

3. Apparatus according to claim 1 or claim 2, wherein the idler rollers (74, 110) are so positioned and spring-urged as to enable the belt to be driven in either direction.

4. Apparatus according to any one of claims 1 to 3, including a first pair (74, 110) and a second pair (72, 73) of idler rollers, and in that the first toothed pulley (75) engages a portion of the toothed belt between the first pair (74, 110) of rollers, and the second toothed pulley (16) engages a portion of the toothed belt between the second pair (72, 73) of rollers.

5. Apparatus according to any one of claims 1 to 4 wherein one of said idler rollers (73) is mounted on a pivotal arm in order to facilitate insertion and removal of the removable device.

6. Apparatus according to any one of claims 1 to 5 wherein part (40) of the apparatus is openable to enable insertion and removal of the removable device, and closable to engage said drive transmission apparatus.

## Patentansprüche

1. Kopierer oder Druckgerät (10), das eine Kassette (12) umfaßt, die entfernbar darin befestigt ist, und wobei die Kassette mindestens eine Bearbeitungseinrichtung (14) umfaßt, die darin angetrieben wird, wenn die Kassette in dem Gerät befestigt ist, und zwar durch einen Antriebsübertragungsmechanismus (70 oder 100 oder 200) von der Antriebseinrichtung innerhalb des Geräts, wobei der Antriebsübertragungsmechanismus aufweist:
eine erste, verzahnte Riemenscheibe (75) in dem Gerät, die durch die Antriebseinrichtung des Geräts angetrieben wird,
eine zweite, verzahnte Riemenscheibe (16) in der Kassette zum Antrieb der Verarbeitungseinrichtung, und
einen verzahnten Riemen (71), der mindestens zwei Spannwalzen (72, 73, 74, 110 oder 210, 215) umläuft, wobei die Zähne des Riemens an der außenseitigen Oberfläche davon sind und die erste und die zweite Riemenscheibe jeweils dazu geeignet sind, um einen nachgiebigen Bereich des Riemens zwischen zwei der Spannwalzen einzugreifen, wobei der verzahnte Riemen und die Spannwalzen entweder an der Kassette oder dem Gerät befestigt sind,
wobei beim Einsetzen der Kassette (12) in oder beim Entfernen der Kassette aus dem Gerät entweder die erste, verzahnte Riemenscheibe (75) (falls der verzahnte Riemen an der Kassette befestigt ist) oder die zweite, verzahnte Riemenscheibe (16) (falls der verzahnte Riemen an dem Gerät befestigt ist) sich in Eingriff oder außer Eingriff mit oder aus einem nachgiebigen Bereich des verzahnten Riemens befindet.

2. Gerät nach Anspruch 1, wobei mindestens eine der verzahnten Riemenscheiben (75 oder 16) den Riemen (71) um einen solchen Betrag ablenkt, daß 5 oder 9 Zähne des Riemens durch die Zähne der Riemenscheibe eingegriffen werden.

3. Gerät nach Anspruch 1 oder Anspruch 2, wobei die Spannwalzen (74, 110) so positioniert und federvorgespannt sind, um dem Riemen zu ermöglichen, daß er in irgendeiner Richtung angetrieben wird.

4. Gerät nach einem der Ansprüche 1 bis 3, das ein erstes Paar (74, 110) und ein zweites Paar (72, 73) Spannwalzen umfaßt, und daß die erste, verzahnte Riemenscheibe (75) in einen Bereich des verzahnten Riemens zwischen dem ersten Paar (74, 110) der Walzen eingreift und die zweite, verzahnte Riemenscheibe (16) in einen Bereich des verzahnten Riemens zwischen dem zweiten Paar (72, 73) der Walzen eingreift.

5. Gerät nach einem der Ansprüche 1 bis 4, wobei eine der Spannwalzen (73) an einem Schwenkarm befestigt ist, um ein Einsetzen und Entfernen der entfernbaren Einrichtung zu erleichtern.

6. Gerät nach einem der Ansprüche 1 bis 5, wobei ein Teil (40) des Geräts zu öffnen ist, um ein Einsetzen und Entfernen der entfernbaren Einrichtung zu erleichtern, und schließbar ist, um das Antriebsübertragungsgerät In Eingriff zu bringen.

## Revendications

1. Imprimante ou copieur (10) comprenant une cartouche (12) qui est montée d'une manière amovible et interne, la cartouche comprenant au moins un moyen de traitement (14) qui est entraîné, lorsque la cartouche est montée dans l'appareil, par un mécanisme de transmission (70 ou 100 ou 200) faisant partie du moyen d'entraînement logé dans l'appareil, le mécanisme de transmission comprenant :
une première poulie dentée (75) située dans l'appareil entraînée par le moyen d'entraînement de l'appareil,
une seconde poulie dentée (16) située dans la cartouche destinée à entraîner le moyen de traitement, et
une courroie dentée (71) entourant au moins deux rouleaux intermédiaires (72, 73, 74, 110 ou 210, 215), les dents de la courroie étant disposées sur la surface extérieure qu'elle comporte et les première et seconde poulies étant chacune conçues pour coopérer avec une partie adaptative de la courroie entre deux desdits rouleaux intermédiaires, la courroie dentée et les rouleaux intermédiaires étant montés soit sur la cartouche soit sur l'appareil,
d'où il résulte que lors de l'insertion de la cartouche (12) dans l'appareil, ou de son enlèvement de celui-ci, soit la première poulie dentée (75) (si la courroie dentée est montée sur la cartouche) soit la seconde poulie dentée (16) (si la courroie dentée est montée sur l'appareil), coopère avec une partie adaptative de la courroie dentée, soit en est désengagée.

2. Appareil selon la revendication 1, dans lequel l'une au moins desdites poulies dentées (75 ou 16) dévie ladite courroie (71) d'une quantité telle que 5 à 9 dents de la courroie coopèrent avec les dents de la poulie.

3. Appareil selon la revendication 1 ou 2, dans lequel les rouleaux intermédiaires (75, 110) sont positionnés et poussés par ressort d'une manière telle à permettre que la courroie soit entraînée dans l'une ou l'autre direction.

4. Appareil selon l'une quelconque des revendications 1 à 3, comprenant une première paire (74, 110) et une seconde paire (72, 73) de rouleaux intermédiaires et caractérisé en ce que la première poulie dentée (75) coopère avec une partie de la courroie dentée entre la première paire (74, 110) de rouleaux et en ce que la seconde poulie dentée (16) coopère avec une partie de la courroie dentée entre la seconde paire (72, 73) de rouleaux.

5. Appareil selon l'une quelconque des revendications 1 à 4, dans lequel l'un desdits rouleaux intermédiaires (73) est monté sur un bras pivotant en vue de faciliter l'insertion et l'enlèvement du dispositif amovible.

6. Appareil selon l'une quelconque des revendications 1 à 5, dans lequel une partie (40) de l'appareil possède la faculté de s'ouvrir pour permettre l'insertion et l'enlèvement du dispositif amovible et de se fermer pour engager ledit appareil de transmission.
